# EUROPEAN PATENT APPLICATION

(11) **EP 2 881 754 A1**
(43) Date of publication of application: **10.06.2015**
(21) Application number: 13195991.8
(22) Date of filing: 06.12.2013
(51) Int. Cl.: G01S 13/93, G01S 13/90

(54) **Vehicle radar for environmental detection**

(71) Applicant: Autoliv Development AB, 447 83 Vårgårda (SE)
(72) Inventor: Laoufi, Moroine, 92600 Asnieres-sur-Seine (FR)
(74) Representative: Sandstedt, Jonas Sven James

(57) **Abstract**

The present invention relates to a vehicle Doppler radar system (3, 3') comprising a transmitter arrangement (4), a receiver arrangement (7) and at least one control unit (15). The radar system (3, 3') is arranged to be mounted in a vehicle (1) having a forward running direction (F). The transmitter arrangement (4) comprises a signal generator (5) and a transmitter antenna arrangement (6) arranged for transmitting signals (11), and the receiver arrangement (7) comprises a receiver (8) and a receiver antenna arrangement (9) arranged for receiving reflected signals (12). The radar system (3, 3') is arranged to obtain a plurality of measure results from the received reflected signals (12). Each measure results in a measuring point (14), where the control unit (15) is arranged to subject each measuring point (14) to a probability analysis to determine the probability that a certain measuring point (14) represents the presence of an object.

The present invention also relates to a corresponding method.

## Description

### DESCRIPTION OF THE INVENTION

The present invention relates to a vehicle Doppler radar system comprising a transmitter arrangement, a receiver arrangement and at least one control unit. The radar system is arranged to be mounted in a vehicle having a forward running direction. The transmitter arrangement comprises a signal generator and a transmitter antenna arrangement arranged for transmitting signals. The receiver comprises a receiver and a receiver antenna arrangement arranged for receiving reflected signals. The radar system is arranged to obtain a plurality of measure results from the received reflected signals.

The present invention also relates to a method for a vehicle Doppler radar system that is used in a vehicle having a forward running direction. The method comprises the steps of transmitting signals; receiving reflected signals; and obtaining a plurality of measure results from the received reflected signals.

Today, one or more radar systems are often used in vehicles in order to detect obstacles in the surroundings. Such a radar system is usually arranged to distinguish or resolve single targets from the surroundings by using a Doppler effect in a previously well-known manner.

Apart from use for collision detector arrangements, radars may for example be used for detecting available space for parking spots, assisting when parking a vehicle, and for a warning system for obstacles that will prevent the opening of a vehicle door, which obstacle otherwise could damage the door if opened into the obstacle.

When detecting available space for parking spots, an estimation of the dimensions of a possible parking spot is desired, in particular its depth and length.

Such a radar system is described in WO 2008029038, where a radar transceiver is arranged on a side portion of a vehicle. The radar system works as a SAR (Synthetic Aperture Radar) where a complex SAR image is acquired when the vehicle moves along the parking space and is processed to obtain a real-valued picture. The processing may include weighting image pixels based on variation of adjacent image pixels.

However, the approach disclosed in WO 2008029038 demands a lot of processing capacity, and may be slow.

The object of the present invention is thus to provide a vehicle radar for environmental detection in the form of SAR which acquires the required data in a less complicated manner.

Said object is achieved by means of a vehicle Doppler radar system comprising a transmitter arrangement, a receiver arrangement and at least one control unit. The radar system is arranged to be mounted in a vehicle having a forward running direction. The transmitter arrangement comprises a signal generator and a transmitter antenna arrangement arranged for transmitting signals. The receiver comprises a receiver and a receiver antenna arrangement arranged for receiving reflected signals. The radar system is arranged to obtain a plurality of measure results from the received reflected signals. Furthermore, each measure results in a measuring point, where said control unit is arranged to subject each measuring point to a probability analysis to determine the probability that a certain measuring point represents the presence of an object.

Said object is also achieved by means of a method for a vehicle Doppler radar system that is used in a vehicle having a forward running direction. The method comprises the steps of transmitting signals; receiving reflected signals; and obtaining a plurality of measure results from the received reflected signals.

The method further comprises the steps of subjecting measuring points to a probability analysis, each measuring point resulting from a corresponding measure result; and determining the probability that a certain measuring point represents the presence of an object.

According to an example, each measuring point is detected a number of times when being passed by the vehicle. For each measuring point, said control unit is arranged to determine a mean value for the previously determined probabilities that the measuring point represents the presence of an object.

According to another example, said control unit is arranged to perform the probability analysis by means of a matrix model. A matrix is then created, having matrix elements corresponding to measuring points extending both along the forward direction and perpendicular to the forward direction.

According to another example said control unit is arranged to perform the probability analysis by means of a dual vector model. The vector elements of each vector correspond to measuring points extending along the forward direction. A first vector has vector elements that comprise the number of points sensed for a certain measuring point. A second vector has corresponding vector elements that comprise data regarding a determined lateral distance to a measuring point that has been determined to represent an object.

Other examples are disclosed in the dependent claims.

A number of advantages are obtained by means of the present invention. Mainly, a vehicle radar system is disclosed where the risk for detection errors such as false detection is minimized.

### BRIEF DESCRIPTION OF THE DRAWINGS

The present invention will now be described more in detail with reference to the appended drawings, where:
- Figure 1: shows a schematic side view of a vehicle;
- Figure 2: shows a simplified schematic view of a radar system according to the present invention;
- Figure 3: shows a simplified top view of a vehicle passing a parking;
- Figure 4: shows a simplified top view of a vehicle passing a parking according to a first example;
- Figure 5: shows a simplified top view of a vehicle passing a parking according to a second example;
- Figure 6a: shows a simplified partial top view of a vehicle with an opened door according to a third example;
- Figure 6b: shows a simplified partial side view of a vehicle with an opened door according to the third example; and
- Figure 7: shows a flowchart for a method according to the present invention.

### DETAILED DESCRIPTION

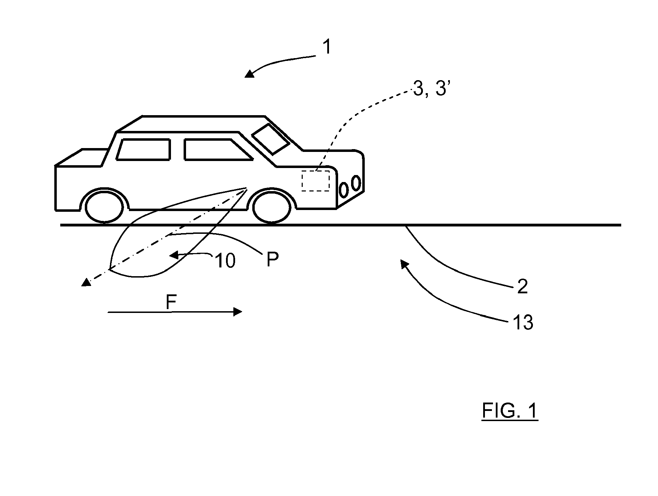

Figure 1 schematically shows a side view a vehicle 1 that runs on a road 2 in a forward direction F, where the vehicle 1 comprises a vehicle radar system 3 which is arranged to distinguish and/or resolve single targets from the surroundings by using a Doppler effect in a previously well-known manner, i.e. successive echoes from the same point are superimposed and identified by means of Doppler effect. The radar system is positioned on the right-hand side of the vehicle, and has a main field 10 of view that is aimed in a pointing direction P that extends more or less perpendicular to the forward direction F.

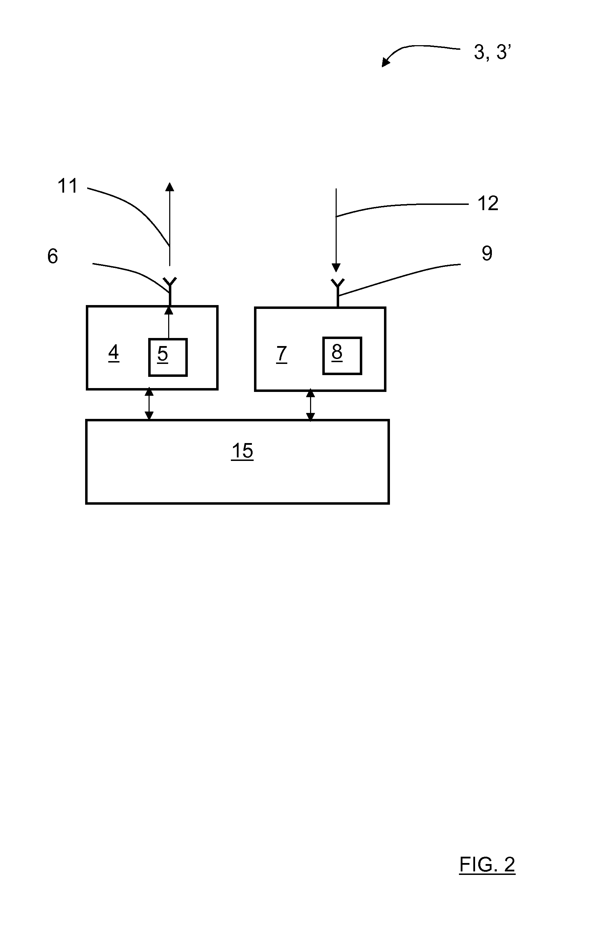

With reference also to Figure 2, the radar system 3 comprises a transmitter arrangement 4 which in turn comprises a signal generator 5 and a transmitter antenna arrangement 6. The vehicle radar system 3 further comprises a receiver arrangement 7, which in turn comprises a receiver 8 and a receiver antenna arrangement 9.

Transmitted signals 11 are reflected, and the reflected signals 12 are received by the receiver 8 via the receiver antenna arrangement 9. When in use, the transmitter antenna arrangement 6 sends a signal laterally in the pointing direction P when the vehicle 1 runs past a parking 13, the radar system 3 having said certain field of view 10 that passes along the parking 13. The radar system 3 then receives echoes of the transmitted signals 11 by means of the receiver antenna arrangement 8. The field of view 10 corresponds to the beamwidth of the antenna arrangements 6, 9 in a previously known manner.

The above is repeated as many times as necessary at a predetermined frequency band, while the vehicle moves along the parking 13 in the forward direction F, to obtain required information regarding possible parking spots.

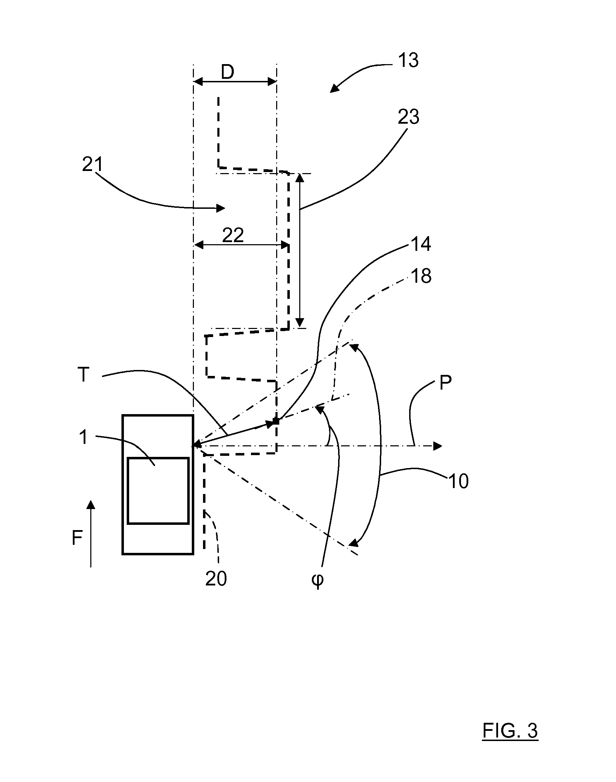

According to the present invention, with reference also to Figure 3, each measure results in a measuring point 14, where each measuring point 14 is subject to a probability analysis which is arranged to determine the probability that a certain measuring point 14 represents the presence of an object. All analyses and determinations are performed by means at least one control unit 15 comprised in the radar system 3.

The probability analysis uses probability weights. For example, if a certain measuring point 14, as shown in Figure 3, is determined to have a high probability of representing the presence of an object, other measuring points that are within the field of view 10 of the radar system 3 at that moment, and are positioned closer to the vehicle 1 than the measuring point 14, are weighted to have a low probability of representing the presence of an object. In Figure 3, this means that all measuring points positioned between the measuring point 14 and the vehicle 1 are weighted to have a low probability of representing the presence of an object if the indicated measuring point 14 is determined to have a high probability of representing the presence of an object.

Each measuring point is detected several times as the vehicle 1 moves in the forward direction F during a plurality of sample times, where at each sample time measuring points with the field of view 10 are detected. For each such detection, the position of a measuring point 14 is determined with respect to the vehicle's position by a target distance T, running between the measuring point 14 and the transmitter antenna arrangement, and a target angle ϕ running between the pointing direction P and an extension 18 of the target distance T. As the vehicle approaches a certain measuring point 14, the target angle ϕ decreases until it equals zero, when the pointing direction P passes the measuring point, and then increases. A lateral distance D between the vehicle and the measuring point 14 may be calculated as the target distance T times cosine for the target angle ϕ, i.e. D = T*cos (ϕ)

Each detection of a certain measuring point results in a probability for that the measuring point represents the presence of an object. A mean value for this probability is stored.

When a measuring point 14 is determined to have a high probability of representing the presence of an object, i.e. when the probability of representing the presence of an object exceeds a certain threshold, it is determined that the measuring point represents the presence of an object. By means of the acquired measuring points which are determined to represent the presence of an object, a parking edge 20 is determined. On the side of the parking edge that faces the vehicle 1, it has been determined that there are no objects present. The parking edge 20 is preferably filtered such that possible holes and peaks in the parking edge 20 which are determined to be erratic are removed, smoothing the parking edge 20.

By means of the now acquired parking edge 20, it is now determined whether there is a useful parking spot 21 available, i.e. a spot which has a sufficient depth 22 and sufficient length 23 admit parking of the vehicle 1.

The present invention uses processed radar data, which is based on that the processed data provide information of detected measuring points 14 which have been determined to constitute objects that are the closest to the vehicle 1. This is the basis of the probability approach discussed above. In other words, the detected objects are considered to constitute the parking edge 20 of the parking line along the street.

When a measuring point 14 has been determined to represent the presence of an object, any other measuring point between the vehicle 1 and said measuring point 14 is likely to be "empty" since otherwise any one of these other measuring point would have been determined to represent the presence of an object before, being closer to the vehicle 1. Therefore, suitably, a negative weight is given to the probability of having an object in such a position.

Considering potential errors of the radar system, it is never 100% reliable and could "miss" an object, a high degree of probability is conferred when detecting a measuring point is detected as an object, for example with a relatively high positive value such as +10, while a relatively low negative value such as for example -1 is conferred when assuming that a measuring point is "empty".

When the radar system has screened the parking 13 with its radar, it is possible to define the parking edge 20 based on the final value, positive or negative, of each measuring point. Measuring points beyond the parking edge 20 should be conferred a neutral value such as zero.

For a certain measuring point 14, there will be a plurality of sample times where potential errors such as false detections will be washed out by the normally low probability of having an error occurring at the same measuring point several times.

According to a first detailed example, the probability analysis is made by means of a matrix model, where a matrix 24 is created having matrix elements 25 (only a few indicated in the Figure) corresponding to measuring points extending both along the forward direction F and perpendicular to the forward direction F. By means of the matrix model, measuring points 14 are used for creating a two-dimensional top view of the parking 13, however, beyond detected objects there is an unexplored region 26 due to the presence of the detected objects.

By means of this approach, the parking edge 20 is determined by the control unit 15 that is arranged to evaluate different measuring points having different probabilities for representing the presence of an object along a certain width 27 along the parking edge 20. As previously, on the side of the second parking edge 20 that faces the vehicle 1, it has been determined that there are no objects present, and on the other side the unexplored region 26 lies.

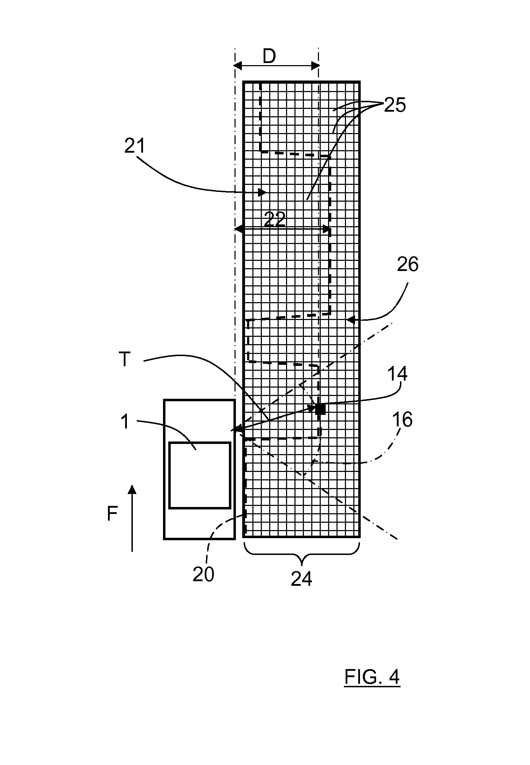

For reasons of clarity, not all measures of Figure 3 are indicated in Figure 4.

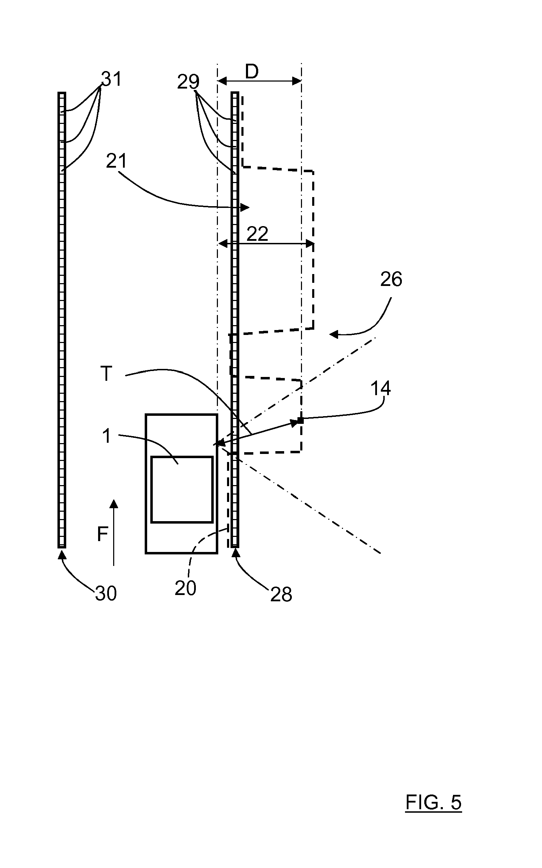

According to a second example, with reference to Figure 5, the probability analysis is made by means of a dual vector model, where the vector elements of each vector correspond to measuring points extending along the forward direction F. A first vector 28 having vector elements 29 (only a few indicated in the Figure) comprises number of points sensed for a certain measuring point 14, and a second vector 30, having corresponding vector elements 31 (only a few indicated in the Figure) comprising data regarding a determined lateral distance to a measuring point that has been determined to represent an object.

Each measuring point is detected several times and each detection of a certain measuring point results in a probability for that the measuring point represents the presence of an object as described above. The control unit 15 is arranged to determine a lateral distance using said probabilities and the number of points sensed for a certain measuring point 14 in the first vector 28. The calculated corresponding lateral distance is stored in the second vector 30.

The information in the second vector 30 is then used to determine a parking edge 20 according to the above.

For reasons of clarity, not all measures of Figure 3 are indicated in Figure 5.

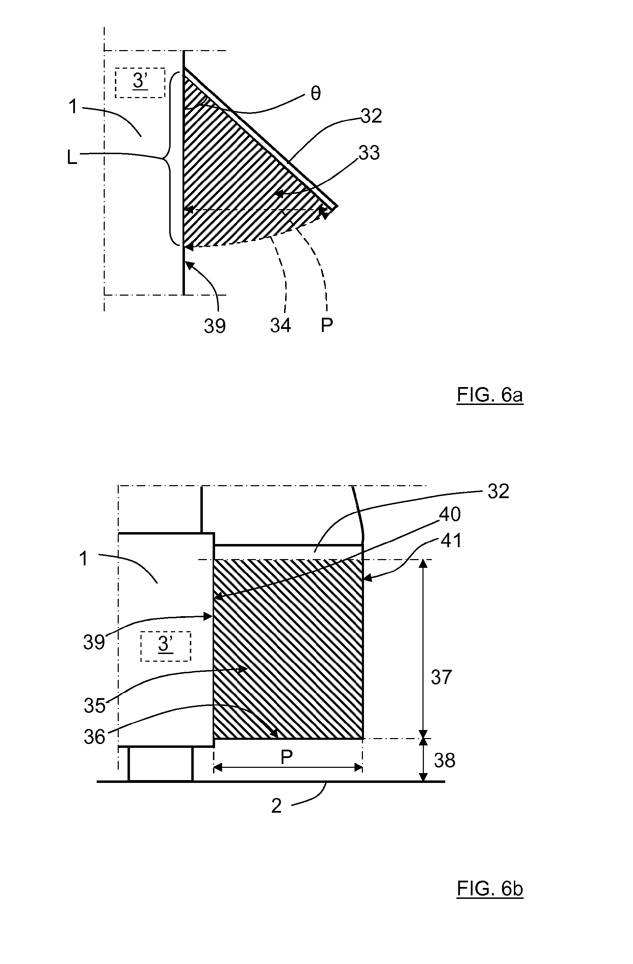

According to a third example, with reference to Figure 6a and Figure 6b, the present invention relates to a radar system 3' for safe door opening. The intention is to provide a warning to occupants in the vehicle 1 if there is not sufficient space available for opening vehicle doors, front doors as well as rear doors. Targets as small as 1 cm should be detected, enabling use of both static and dynamic object discrimination.

As shown in Figure 6a, showing a partial top view of a vehicle 1, and Figure 6b, showing a partial side view of the vehicle 1, a door 32 is shown opened. There is a volume V that is of interest, which volume V is defined by two surfaces and an angle. A first surface 33 is shown in Figure 6a, constituting a sector zone enclosed by a sector arc length 34, and a door side length L, where the door's opening angle forms a sector angle θ between its closed position and its open position.

A second surface 35 is shown in Figure 6b and is constituted by a partial area of the door 32, where the second surface 35 is enclosed by a door lower edge 36, a door inner side 40, a door outer side 41 and a partial area height 37. With reference to both Figure 6a and Figure 6b, when the door 32 is opened along the sector arc length 34, the second surface 35 sweeps along the extension of the sector angle θ such that the second surface 35 passes said volume V. Typically, the maximum value of the sector angle θ for a totally open position of the door 32 is about 60°. There is a minimum distance 38 between the door lower edge 36 and the ground 2 which typically is about 30 cm.

The maximum distance P that the opened door protrudes from the side 39 of the vehicle 1 compared to when it is closed is the door side length L times sinus of the sector angle θ, P = L*sin (θ), where the maximum distance P typically is about 90 cm.

Objects of interest are for example high pavements, poles in the ground, concrete structures, chains, stones etc.

In order to accomplish such a detection, a radar system 3' of the same type as the one in the first example is used, where the environment is reconstructed in a spatial matrix while driving. This also covers objects that move when the vehicle 1 is stationary. The above radar system 3' may be equipped with radar sensor devices for rear view and front view, such that door openings for all parking maneuvers are covered. Also, radar system 3' may be equipped with radar sensor devices for detecting whether a detected object is high enough to potentially collide with the door 32 or not, i.e. if a detected object is determined to have a height that exceeds that of the door lower edge 36.

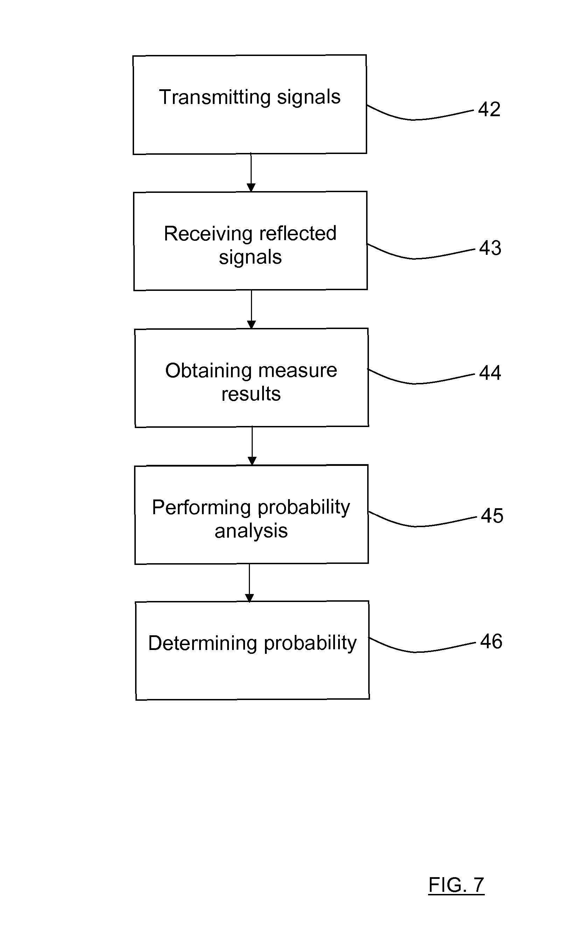

With reference to Figure 7, the present invention also relates to a method for a vehicle Doppler radar system 3, 3' that is used in a vehicle 1 having a forward running direction F. The method comprises the steps of:
42: transmitting signals 11;
43: receiving reflected signals 12; and
44: obtaining a plurality of measure results from the received reflected signals 12.
The method further comprises the steps of:
45: subjecting measuring points 14 to a probability analysis, each measuring point 14 resulting from a corresponding measure result; and
46: determining the probability that a certain measuring point 14 represents the presence of an object.

The present invention is not limited to the examples above, but may vary freely within the scope of the appended claims. For example, the radar system may be implemented in any type of vehicle such as cars, trucks and buses as well as boats and aircraft.

All drawings are simplified, only showing parts that are considered relevant for an adequate description of the present invention. It is understood that the general design of radar systems of this kind is well-known in the art.

The constitution of the antennas comprised in the transmitter antenna arrangement 6 and receiver antenna arrangement 9 may be of any suitable design, such as slot antennas of patch antennas. The transmitter antenna arrangement 6 and receiver antenna arrangement 9 may be combined in one antenna arrangement that is arranged for both transmission and reception by means of, for example, time division.

Radar signals are normally reflected by the closest and/or most reflective objects.

## Claims

1. A vehicle Doppler radar system (3, 3') comprising a transmitter arrangement (4), a receiver arrangement (7) and at least one control unit (15), the radar system (3, 3') being arranged to be mounted in a vehicle (1) having a forward running direction (F), where the transmitter arrangement (4) comprises a signal generator (5) and a transmitter antenna arrangement (6) arranged for transmitting signals (11), and where the receiver arrangement (7) comprises a receiver (8) and a receiver antenna arrangement (9) arranged for receiving reflected signals (12), the radar system (3, 3') being arranged to obtain a plurality of measure results from the received reflected signals (12), **characterized in that** each measure results in a measuring point (14), where said control unit (15) is arranged to subject each measuring point (14) to a probability analysis to determine the probability that a certain measuring point (14) represents the presence of an object.

2. A radar system according to claim 1, **characterized in that** each measuring point (14) is detected a number of times when being passed by the vehicle (1), where, for each measuring point (14), said control unit (15) is arranged to determine a mean value for the previously determined probabilities that the measuring point (14) represents the presence of an object.

3. A radar system according to any one of the claims 1 or 2, **characterized in that** said control unit (15) is arranged to perform the probability analysis by means of a matrix model, where a matrix (24) is created having matrix elements (25) corresponding to measuring points (14) extending both along the forward direction (F) and perpendicular to the forward direction (F).

4. A radar system according to any one of the claims 1 or 2, **characterized in that** said control unit (15) is arranged to perform the probability analysis by means of a dual vector model, where the vector elements (29, 31) of each vector (28, 30) correspond to measuring points (14) extending along the forward direction (F), where a first vector (28) has vector elements (29) that comprise the number of points sensed for a certain measuring point (14), and where a second vector (30) has corresponding vector elements (31) that comprise data regarding a determined lateral distance (D) to a measuring point (14) that has been determined to represent an object.

5. A radar system according to any one of the previous claims, **characterized in that** the radar system (3') is arranged to determine whether there is sufficient space available for opening at least one vehicle door (32).

6. A method for a vehicle Doppler radar system (3, 3') that is used in a vehicle (1) having a forward running direction (F), where the method comprises the steps of:
(42) transmitting signals (11);
(43) receiving reflected signals (12); and
(44) obtaining a plurality of measure results from the received reflected signals (12),
**characterized in that** the method further comprises the steps of:
(45) subjecting measuring points (14) to a probability analysis, each measuring point (14) resulting from a corresponding measure result; and
(46) determining the probability that a certain measuring point (14) represents the presence of an object.

7. A method according to claim 6, **characterized in that** each measuring point (14) is detected a number of times when being passed by the vehicle (1), where, for each measuring point (14), a mean value is determined for the previously determined probabilities that the measuring point (14) represents the presence of an object.

8. A method according to any one of the claims 6 or 7, **characterized in that** the probability analysis is performed by using a matrix model, where a matrix (24) is created having matrix elements (25) corresponding to measuring points extending both along the forward direction (F) and perpendicular to the forward direction (F).

9. A method according to any one of the claims 6 or 7, **characterized in that** the probability analysis is performed by using a dual vector model, where the vector elements (29, 31) of each vector (28, 30) correspond to measuring points extending along the forward direction (F), where a first vector (28) has vector elements (29) that comprise the number of points sensed for a certain measuring point (14), and where a second vector (30) has corresponding vector elements (31) that comprise data regarding a determined lateral distance to a measuring point that has been determined to represent an object.

10. A method according to any one of the claims 6-9, **characterized in that** the radar system (3') is used for determining whether there is sufficient space available for opening at least one vehicle door (32).
